# EUROPÄISCHE PATENTSCHRIFT

(11) **EP 1 811 123 B1**
(45) Veröffentlichungstag und Bekanntmachung des Hinweises auf die Patenterteilung: **24.11.2010**
(21) Anmeldenummer: 07001300.8
(22) Anmeldetag: 22.01.2007
(51) Int. Cl.: E06B 9/72

(54) **Rohrmotor-Antriebsbaugruppe**
Tubular motor drive assembly
Bloc moteur tubulaire

(30) Priorität: 24.01.2006 DE 202006001135 U
(43) Veröffentlichungstag der Anmeldung: 25.07.2007
(73) Patentinhaber: ARCA Beteiligungen GmbH, 46414 Rhede (DE)
(72) Erfinder: Rademacher, Wilhelm, 46414 Rhede (DE)
(74) Vertreter: Gottschald, Jan

(56) Entgegenhaltungen:
- EP-A- 1 326 000
- DE-B- 1 031 075
- DE-U- 1 698 165

## Beschreibung

Die vorliegende Erfindung betrifft eine Verdunkelungsvorrichtung gemäß dem Oberbegriff von Anspruch 1.

Ein verbreitetes Anwendungsbeispiel für die in Rede stehenden Rohrmotor-Antriebsbaugruppen ist eine Verdunkelungseinrichtung wie ein Rolladen o. dgl., der über eine Walze aufgewickelt werden kann. Die Walze ist in einem Rolladenkasten angeordnet, der üblicherweise oberhalb eines Fensters in der Wand eines Gebäudes angeordnet ist. Die Antriebsbaugruppe dient zum motorischen Auf- bzw. Abwickeln des Rolladens.

Die bekannte Verdunkelungsvorrichtung (EP 1 326 000 A2), von der die Erfindung ausgeht, weist ein rohrförmiges Gehäuse auf, das in die dem Rolladen zugeordnete Walze eingeschoben wird. Im montierten Zustand steht die Antriebsbaugruppe in Eingriff mit dem Rolladenkasten einerseits und über einen Mitnehmer mit der Walze andererseits. Im Gehäuse befinden sich ein Antriebsmotor und ein nachgeschaltetes, mehrstufiges Untersetzungsgetriebe. Der Antriebsmotor ist als ein mit hoher Drehzahl laufender Gleichstrommotor ausgestaltet.

Das Untersetzungsgetriebe ist mit einer Stirnrad-Getriebestufe ausgestattet, der eine weitere Getriebestufe nachgeschaltet ist. Es handelt sich hier nicht um eine "durchgängige" Stirnrad-Getriebestufe im üblichen Sinne, da die Ausgangswelle hier ein Kegelrad aufweist, das mit einer seitlich an einem der Stirnräder angeordneten Kegelradverzahnung kämmt.

Bei der bekannten Antriebsbaugruppe wird der Kraftfluß jedenfalls an zwei Stellen über miteinander in Eingriff stehende und zueinander senkrecht ausgerichtete Wellen geleitet. Hierdurch entsteht eine Anordnung, die fertigungstechnisch und hinsichtlich ihres dynamischen Verhaltens optimierbar ist.

Der Erfindung liegt das Problem zugrunde, die bekannte Verdunkelungsvorrichtung derart ausgestalten und weiterzubilden, daß das dynamische Verhalten mit einfachen konstruktiven Mitteln optimiert wird.

Das obige Problem wird bei einer Verdunkelungsvorrichtung gemäß dem Oberbegriff von Anspruch 1 durch die Merkmale des kennzeichnenden Teils von Anspruch 1 gelöst.

Wesentlich ist zunächst die Überlegung, den resultierenden Kraftfluß zwischen der Eingangswelle und der Ausgangswelle über mindestens zwei Zwischenwellen mit ortsfesten Wellenachsen zu verteilen. Damit wird erreicht, daß das von den Zwischenwellen zu übertragende Drehmoment entsprechend reduziert ist. Entsprechend ist auch die zu übertragende Kraft zwischen den Zahnflanken der Zwischenwellen einerseits und der Eingangswelle bzw. der Ausgangswelle andererseits reduziert. Dies bewirkt im Ergebnis eine geringe Schwingungsneigung und einen geringen Verschleiß der beteiligten Komponenten.

In bevorzugter Ausgestaltung gemäß Anspruch 3 ist es so, daß die Wellenachsen der Zwischenwellen jeweils parallel zu und beabstandet von der Hauptwellenachse angeordnet sind. Dies entspricht auf den ersten Blick dem grundsätzlichen Aufbau eine Planetengetriebes, wobei allerdings die Vorzüge eines Stirnradgetriebes beibehalten werden, da die Wellenachsen der Zwischenwelle ja ortsfest ausgestaltet sind.

Bei der bevorzugten Ausgestaltung gemäß Anspruch 10 wird vorgeschlagen, daß der Antriebsmotor ein mit hoher Drehzahl laufender Gleichstrommotor ist. Hier stellt sich durch die hohen Drehzahlen der Antriebswelle des Antriebsmotors, die vorzugsweise um ca. 6.000 U/min liegen, das Problem von Schwingungen, die mit erhöhter Geräuschentwicklung sowie erhöhtem Verschleiß verbunden sind. Mit dem vorschlagsgemäßen Einsatz von mindestens zwei Zwischenwelle läßt sich das Problem dieser Schwingungen vollständig vermeiden. Insofern zeigt die bevorzugte Ausgestaltung gemäß Anspruch 10 eine in jeder Hinsicht optimale Anordnung.

Bei einer weiteren bevorzugten Ausgestaltung ist es so, daß die Baueinheit aus Antriebsmotor und Untersetzungsgetriebe zumindest am vorderen Ende und am hinteren Ende der Baueinheit durch elastische Befestigungsringe radial festgesetzt ist. Durch eine derartige Verwendung elastischer Befestigungsringe läßt sich die Schwingungsneigung des resultierenden Systems weiter reduzieren. Die vom Antriebsmotor und dem nachgeschalteten Untersetzungsgetriebe erzeugten Schwingungen werden durch die elastischen Befestigungsringe derart gedämpft, daß sie von außerhalb des Rolladenkastens nicht wahrnehmbar sind. Hierfür sind die elastischen Befestigungsringe entsprechend auszugestalten und anzuordnen.

In obigem Zusammenhang wird weiter vorgeschlagen, daß an einer Stelle zwischen dem vorderen Ende und dem hinteren Ende der Baueinheit ein weiterer elastischer Befestigungsring vorgesehen ist, der gewissermaßen zu einer Überbestimmung bei der Befestigung der beschriebenen Baueinheit im Gehäuse führt. Durch die Elastizität der Befestigungsringe ist eine solche Überbestimmung hinsichtlich einer Reduzierung der Schwingungsneigung besonders vorteilhaft.

Bei einer anderen bevorzugten Ausgestaltung ist es vorgesehen, daß die Befestigungsringe über ihren Umfang eine Struktur nach Art einer Verzahnung aufweisen. Die Umfangsfläche der Befestigungsringe ist gewissermaßen als fein geritzeltes Zahnrad ausgestaltet. Dies erhöht einerseits die Elastizität der resultierenden Befestigung an sich. Andererseits läßt sich damit die Montage der Baueinheit in das Gehäuse vereinfachen, jedenfalls dann, wenn die Verzahnungsstruktur parallel zur Längsachse des Gehäuses ausgerichtet ist. Auch einer Verdrehung der Baueinheit im Gehäuse wirkt diese Verzahnungsstruktur entgegen.

Weitere Eigenschaften, Merkmale und Vorteile der vorliegenden Erfindung werden nachfolgend anhand der Zeichnung eines bevorzugten Ausführungsbeispiels näher erläutert. Es zeigt
- Fig. 1: in schematischer Darstellung eine Verdunkelungsvorrichtung mit einer vorschlagsgemäßen Rohrmotor-Antriebsbaugruppe,
- Fig. 2: die Rohrmotor-Antriebsbaugruppe gemäß Fig. 1 in einer teilweise geschnittenen Seitenansicht,
- Fig. 3: die Rohrmotor-Antriebsbaugruppe gemäß Fig. 2 in einer Schnittan- sicht gemäß Schnittlinie III-III.

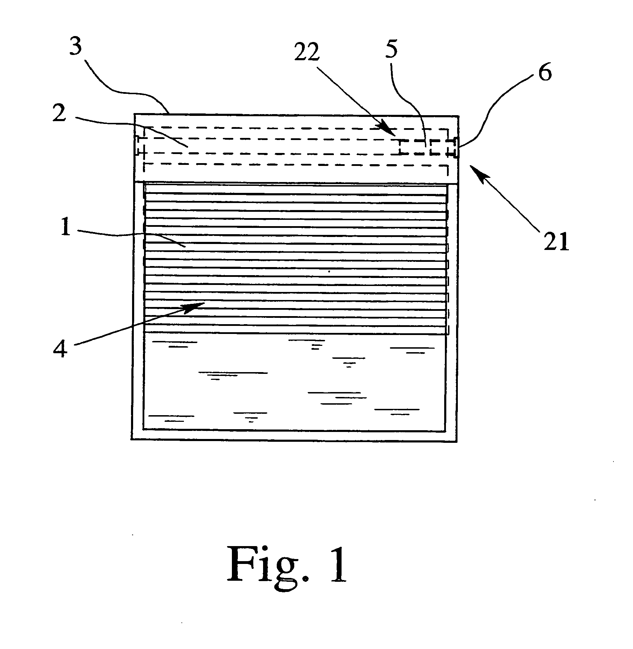

Die in Fig. 1 dargestellte Verdunkelungsvorrichtung besteht in ihrem grundsätzlichen Aufbau aus einem Rolladen 1 und einer Walze 2 zum Aufwickeln des Rolladens 1, wobei die Walze 2 normalerweise in einem Rolladenkasten 3 angeordnet ist, der seinerseits in der Wand eines Gebäudes eingebaut ist, hier oberhalb eines Fensters 4. Zum Drehen der Walze 2 zwecks Aufwickelns des Rolladens 1 dient eine Rohrmotor-Antriebsbaugruppe 5, die an der Walze 2 angedeutet ist. Diese ist an einer Seite ortsfest an der Wand gelagert, mittels eines Widerlagers 6, das hier Teil des Rolladenkastens 3 ist.

Selbstverständlich muß die Rolarmotor-Antriebsbaugruppe 5 gesteuert werden. Dazu dient eine in Fig. 1 nicht dargestellte Steuerelektronik. Nicht dargestellt ist in Fig. 1 der Zeichnung im übrigen, daß für die Beeinflussung der Steuerelektronik verschiedene Schalter und Sensoren vorhanden sind.

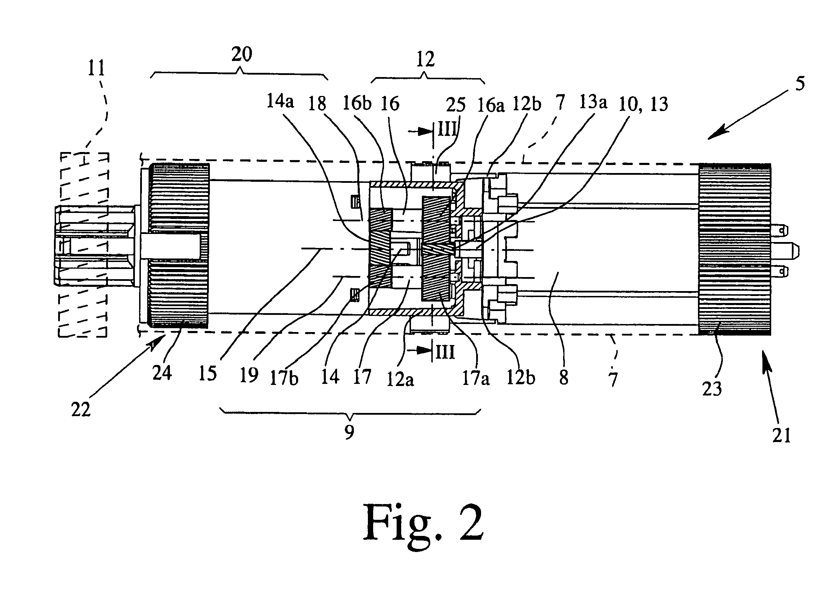

Fig. 2 zeigt den grundsätzlichen Aufbau der vorschlagsgemäßen Rohrmotor-Antriebsbaugruppe 5. Diese ist mit einem in Fig. 2 gestrichelt dargestellten rohrförmigen Gehäuse 7 und im Gehäuse 7 angeordnet einem elektrischen Antriebsmotor 8 und einem mehrstufigen Untersetzungsgetriebe 9 ausgestattet.

Das Untersetzungsgetriebe 9 ist eingangsseitig mit der Antriebswelle 10 des Antriebsmotors 8 und ausgangsseitig mit einem Mitnehmer 11 gekoppelt. Der Mitnehmer 11 ist antriebstechnisch mit der Walze 2 verbunden. Das Untersetzungsgetriebe 9 weist eine Stirnrad-Getriebestufe 12 auf, wobei die Stirnrad-Getriebestufe 12 eine Eingangswelle 13 mit Eingangs-Stirnrad 13a und eine Ausgangswelle 14 mit Ausgangs-Stirnrad 14a aufweist. Dies ist dem beschnittenen Bereich in Fig. 2 zu entnehmen, in dem die Rohrmotor-Antriebsbaugruppe 5 ohne rohrförmiges Gehäuse 7 dargestellt ist.

Es ist der Darstellung in Fig. 2 ferner zu entnehmen, daß die Eingangswelle 13 und die Ausgangswelle 14 der Stirnrad-Getriebestufe 12 um dieselbe ortfeste Hauptwellenachse 15 drehbar sind. Mit "Wellenachse" ist hier nur eine geometrische Angabe gemeint, und nicht etwa eine körperlich vorhandene Achse.

Zur antriebstechnischen Kopplung der Eingangswelle 13 mit der Ausgangswelle 14 sind mindestens zwei Zwischenwellen 16, 17 mit ortsfesten Wellenachsen 18, 19 vorgesehen, die derart ausgestaltet und angeordnet sind, daß sich der resultierende Kraftfluß vorzugsweise gleichmäßig über die Zwischenwellen 16, 17 verteilt.

Bei der in Fig. 2 dargestellten und insoweit bevorzugten Ausgestaltung verläuft der Kraftfluß von der Eingangswelle 13 über die beiden Zwischenwellen 16, 17 zu der Ausgangswelle 14. Die mit der Aufteilung des Kraftflusses auf mehrere Zwischenwellen 16, 17 verbundene Vorteil wurde im allgemeinen Teil der Beschreibung erläutert.

Im Sinne einer optimalen Bauraumausnutzung ist die Wellenachse der Antriebswelle 10 identisch zu der Hauptwellenachse 15 der Stirnrad-Getriebestufe 12. Im dargestellten und insoweit bevorzugten Ausführungsbeispiel ist die Antriebswelle 10 ferner identisch mit der Eingangswelle 13 der Stirnrad-Getriebestufe 12.

Die Wellenachsen 18, 19 der Zwischenwellen 16, 17 sind jeweils parallel zu und beabstandet von der Hauptwellenachse 15 angeordnet. Dies bedeutet, daß alle der Stirnrad-Getriebestufe 12 zugeordneten Wellen 13, 14, 16, 17 koaxial zur Hauptwellenachse 15 oder parallel zur Hauptwellenachse 15 ausgerichtet sind. Eine Umlenkung des Kraftflusses über zueinander senkrecht ausgerichtete Wellen ist hier nicht vorgesehen. Dies führt zu einer kompakten und fertigungstechnisch wenig anspruchsvollen Anordnung.

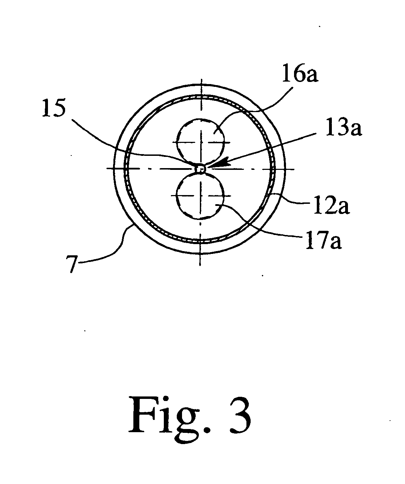

In besonders bevorzugter Ausgestaltung ist es vorgesehen, daß die Wellenachsen 18, 19 der Zwischenwellen 16, 17 über den Winkelbereich um die Hauptwellenachse 15 herum gleichmäßig verteilt angeordnet sind. Bei zwei Zwischenwellen 16, 17 bedeutet dies, daß deren Wellenachsen 18, 19, wie in Fig. 3 dargestellt, hinsichtlich der Hauptwellenachse 15 um 180° zueinander versetzt anordnet sind. Sofern drei Zwischenwellen vorgesehen sind, so sind deren Wellenachsen hinsichtlich der Hauptwellenachse 15 um 120° zueinander versetzt angeordnet. Entsprechendes gilt für mehr als drei Zwischenwellen. Diese gleichmäßige Verteilung der Wellenachsen 18, 19 der Zwischenwellen 16, 17 führt zu einer optimalen Abstützung der Eingangswelle 13 und im Ergebnis zu einer weiteren Reduzierung der Schwingungsneigung.

Die Zwischenwellen 16, 17 weisen jeweils ein vorderes Stirnrad 16a, 17a auf, das mit dem Eingangs-Stirnrad 13a in Eingriff steht. Ferner weisen die Zwischenwellen 16, 17 ein hinteres Stirnrad 16b, 17b auf, das mit dem Ausgangs-Stirnrad 14a in Eingriff steht. Die Angaben "vorderes" Stirnrad 16a, 17a und "hinteres" Stirnrad 16b, 17b sind hier auf eine Richtung vom Antriebsmotor 8 zum Mitnehmer 11 hin zu verstehen.

In besonders bevorzugter Ausgestaltung ist die Verzahnung des vorderen Stirnrads 16a, 17a und des hinteren Stirnrads 16b, 17b unmittelbar in der jeweiligen Zwischenwelle 16, 17 vorgesehen. Dies bedeutet, daß die vorderen und hinteren Stirnräder 16a, 17a, 16b, 17b nicht auf die jeweilige Welle 16, 17 aufgesteckt ist, sondern mit der jeweiligen Zwischenwelle 16, 17 ein einstückiges Bauteil bilden. In besonders bevorzugter Ausgestaltung sind die Zwischenwellen 16, 17 jeweils als einstückiges Bauteil, vorzugsweise aus Kunststoff o. dgl., ausgestaltet. Dies führt zu geringen Herstellungs- und Montagekosten.

Es läßt sich der Darstellung in Fig. 2 entnehmen, daß das Eingangs-Stirnrad 13a der Eingangswelle 13 zusammen mit dem vorderen Stirnrad 16a, 17a jeder Zwischenwelle 16, 17 eine erste Drehzahluntersetzung bewirkt. Das hintere Stirnrad 16b, 17b jeder Zwischenwelle 16, 17 bewirkt zusammen mit dem Ausgangs-Stirnrad 14a der Ausgangswelle 14 eine zweite Drehzahluntersetzung. Die insgesamt erreichbare Drehzahluntersetzung ist angesichts des geringen Platzbedarfs vergleichsweise hoch.

Versuche haben ergeben, daß der Durchmesser des vorderen Stirnrads 16a, 17a jeder Zwischenwelle 16, 17 und der Durchmesser des hinteren Stirnrads 16b, 17b jeder Zwischenwelle vorzugsweise in einem Verhältnis von zwischen ca. 2,0:1 und ca. 2,5:1 zueinander stehen sollten. Je nach Anwendungsfall können hier auch andere Größenverhältnisse vorteilhaft sein.

Im dargestellten und insoweit bevorzugten Ausführungsbeispiel sind die Verzahnungen der Stirnräder 13a, 14a, 16a, 16b, 17a, 17b schrägverzahnt ausgestaltet. Dies hat insbesondere im Hinblick auf die Schwingungsneigung und das Geräuschverhalten Vorteile.

Es wurde bereits darauf hingewiesen, daß die Zwischenwellen 16, 17 vorzugsweise aus Kunststoff o. dgl. ausgestaltet sind. Dies gilt auch für die übrigen der Stirnrad-Getriebestufe 12 zugeordneten Wellen bzw. Stirnräder 13, 13a, 14, 14a.

In bevorzugter Ausgestaltung sind die Zwischenwellen 16, 17 in einem Käfig 12a angeordnet, in dem die Zwischenwellen 16, 17 jedenfalls einseitig gelagert sind. Es kann dabei vorgesehen sein, daß der Käfig 12a zusammen mit den Zwischenwellen 16, 17 eine separat montierbare Baueinheit bildet. Dies hat insbesondere im Hinblick auf die Montage besondere Vorteile. Der Käfig 12a ist vorzugsweise aus Kunststoff o. dgl. ausgestaltet.

Die Ausgestaltung der Stirnrad-Getriebestufe 12 in einem Käfig 12a ist auch im Hinblick auf eine ggf. vorgesehene, modulare Ausgestaltung der Rohrmotor-Antriebsbaugruppe 5 besonders vorteilhaft. Sofern der Käfig 12a zusammen mit den Zwischenwellen 16, 17 eine separat montierbare Baueinheit bildet, kann die Stirnrad-Getriebestufe 12 durch Austausch des Käfigs 12a auf einfache Weise ausgetauscht werden. Damit ist es möglich, die Auslegung des Untersetzungsgetriebes 9 dadurch zu ändern, daß der vorhandene Käfig 12a durch einen anderen Käfig 12a ersetzt wird. Der Käfig 12a ist vorzugsweise über Schnappelemente 12b mit den übrigen Komponenten verbunden. Grundsätzlich könnte die Stimrad-Getriebestufe 12 auch durch eine Planetenrad-Getriebestufe ersetzt werden.

Die Stirnrad-Getriebestufe 12 ist hier dem Antriebsmotor 8 unmittelbar nachgeschaltet. Dies ist insofern vorteilhaft, als hier die höchsten Drehzahlen vorliegen, so daß diese Getriebestufe hinsichtlich der Schwingungsneigung optimal auszulegen ist. Dies stellt die vorschlagsgemäße Stirnrad-Getriebestufe 12 mit mehreren Zwischenwellen 16, 17 sicher.

Der Stirnrad-Getriebestufe 12 ist bei der dargestellten bevorzugten Ausgestaltung eine Planetenrad-Getriebestufe 20 nachgeschaltet. Dabei ist die Ausgangswelle 14 der Stirnrad-Getriebestufe 12 dem Sonnenrad der nachgeschalteten Planetenrad-Getriebestufe 20 zugeordnet. Grundsätzlich kann es vorgesehen sein, daß der Stirnrad-Getriebestufe 12 mehrere vorzugsweise unterschiedliche Planetenrad-Getriebestufen nachgeschaltet sind. Als besonders vorteilhaft hat sich die Realisierung von zwei nachgeschalteten Planetenrad-Getriebestufen erwiesen.

Es hat sich weiter als besonders vorteilhaft erwiesen, wenn der Antriebsmotor 8 ein mit hoher Drehzahl laufender Gleichstrommotor ist und das Untersetzungsgetriebe 9 ein entsprechend großes Untersetzungsverhältnis aufweist. Die Vorteile der unmittelbar dem Antriebsmotor 8 nachgeschalteten, vorschlagsgemäßen Stirnrad-Getriebestufe 12 können dann insbesondere hinsichtlich deren geringen Schwingungsneigung bei hohen Drehzahlen voll zur Geltung kommen.

Der Antriebsmotor 8 ist weiter vorzugsweise als Gleichstrommotor für Netzspannung ausgeführt und über eine Gleichrichterschaltung direkt an Netzspannung anschließbar. Hinsichtlich der Ausgestaltung der Rohrmotor-Antriebsbaugruppe 5 mit einem derartigen Gleichstrommotor darf auf die europäische Patentanmeldung EP 1 091 078 A2 verwiesen werden, die auf die Anmelderin zurückgeht und deren Inhalt in vollem Umfange zum Gegenstand der vorliegenden Anmeldung gemacht wird.

Der speziellen Befestigung der aus dem Antriebsmotor 8 und dem Untersetzungsgetriebe 9 gebildeten Baueinheit im rohrförmigen Gehäuse 7 kommt vorliegend ebenfalls besondere Bedeutung zu. Dabei ist die Baueinheit aus Antriebsmotor 8 und Untersetzungsgetriebe 9 zumindest am vorderen Ende 21 und am hinteren Ende 22 der Baueinheit durch elastische Befestigungsringe 23, 24 radial festgesetzt. Die mit den elastischen Befestigungsringen verbundenen Vorteile wurden im allgemeinen Teil der Beschreibung erläutert.

Besonders vorteilhaft ist es, wenn an einer Stelle zwischen dem vorderen Ende 21 und dem hinteren Ende 22 der Baueinheit ein weiterer elastischer Befestigungsring 25 vorgesehen ist. Dieser weitere Befestigungsring 25 befindet sich vorliegend im Bereich der Stirnrad-Getriebestufe 12.

Es sind eine Reihe vorteilhafter Werkstoffe für die Realisierung der Befestigungsringe 23, 24, 25 denkbar. Als besonders vorteilhaft hat sich die Ausgestaltung der Befestigungsringe 23, 24, 25 aus einem kautschukhaltigen Material herausgestellt.

Der Darstellung in Fig. 2 ist die konstruktive Ausgestaltung der Befestigungsringe 23, 24, 25 zu entnehmen. Hier ist es so, daß die Befestigungsringe 23, 24, 25 über ihren Umfang eine Struktur nach Art einer Verzahnung aufweisen und daß diese Struktur parallel zur Längsachse des rohrförmigen Gehäuses 7 ausgerichtet ist. Die Längsachse des rohrförmigen Gehäuses 7 fällt hier mit der Hauptwellenachse 15 zusammen. Die obige Strukturierung der Umfangsfläche der Befestigungsringe 23, 24, 25 bewirkt zusätzlich zu der materialeigenen Elastizität eine zusätzliche Elastizität durch die Formgebung. Ferner ermöglicht sie ein einfaches Einschieben der Baueinheit aus Antriebsmotor 8 und Untersetzungsgetriebe 9 in das rohrförmige Gehäuse 7 und verhindert gleichzeitig eine Verdrehung dieser Baueinheit gegenüber dem rohrförmigen Gehäuse. Dabei ist herauszustellen, daß die Festsetzung der Baueinheit durch die Befestigungsringe 23, 24, 25 konstruktiv besonders einfach zu realisieren ist.

Das rohrförmige Gehäuse 7 kann einteilig, oder aber aus zwei Halbschalen ausgebildet sein. Bei der Ausbildung mit zwei Halbschalen ist die Fertigung besonders einfach. Dabei ist eine Ausgestaltung aus Metall(-blech) oder Kunststoff denkbar.

## Patentansprüche

1. Verdunkelungsvorrichtung mit einer Rohrmotor-Antriebsbaugruppe mit einem rohrförmigen Gehäuse (7) und im Gehäuse (7) angeordnet einem elektrischen Antriebsmotor (8) und einem mehrstufigen Untersetzungsgetriebe (9), wobei der Antriebsmotor (8) eine Antriebswelle (10) aufweist, wobei das Untersetzungsgetriebe (9) eingangsseitig mit der Antriebswelle (10) des Antriebsmotors (8) und ausgangsseitig mit einem Mitnehmer (11) gekoppelt ist, wobei das Untersetzungsgetriebe (9) eine Stirnrad-Getriebestufe (12) aufweist und wobei die Stirnrad-Getriebestufe (12) eine Eingangswelle (13) mit Eingangs-Stirnrad (13a) und eine Ausgangswelle (14) mit Ausgangs-Stirnrad (14a) aufweist,
**dadurch gekennzeichnet,**
**daß** die Eingangswelle (13) und die Ausgangswelle (14) um dieselbe ortsfeste Hauptwellenachse (15) drehbar sind, daß zur antriebstechnischen Kopplung der Eingangswelle (13) mit der Ausgangswelle (14) mindestens zwei Zwischenwellen (16, 17) mit ortsfesten Wellenachsen (18, 19) vorgesehen sind, die derart ausgestaltet und angeordnet sind, daß sich der resultierende Kraftfluß vorzugsweise gleichmäßig über die Zwischenwellen (16, 17) verteilt.

2. Verdunkelungsvorrichtung nach Anspruch 1, **dadurch gekennzeichnet, daß** die Wellenachse der Antriebswelle (10) identisch zu der Hauptwellenachse (15) ist.

3. Verdunkelungsvorrichtung nach Anspruch 1 oder 2, **dadurch gekennzeichnet, daß** die Wellenachsen (18, 19) der Zwischenwellen (16, 17) jeweils parallel zu und beabstandet von der Hauptwellenachse (15) angeordnet sind.

4. Verdunkelungsvorrichtung nach einem der vorhergehenden Ansprüche, **dadurch gekennzeichnet, daß** die Wellenachsen (18, 19) der Zwischenwellen (16, 17) über den Winkelbereich um die Hauptwellenachse (15) herum gleichmäßig verteilt angeordnet sind, vorzugsweise, daß zwei Zwischenwellen (16, 17) vorgesehen sind, deren Wellenachsen (18, 19) hinsichtlich der Hauptwellenachse (15) um 180° zueinander versetzt angeordnet sind, oder, daß drei Zwischenwellen vorgesehen sind, deren Wellenachsen hinsichtlich der Hauptwellenachse (15) um 120° zueinander versetzt angeordnet sind.

5. Verdunkelungsvorrichtung nach einem der vorhergehenden Ansprüche, **dadurch gekennzeichnet, daß** die Zwischenwellen (16, 17) jeweils ein vorderes Stirnrad (16a, 17a), das mit dem Eingangs-Stirnrad (13a) in Eingriff steht, und ein hinteres Stirnrad (16b, 17b), das mit dem Ausgangs-Stirnrad (14a) in Eingriff steht, aufweisen, vorzugsweise, daß die Verzahnung des vorderen Stirnrads (16a, 17a) und hinteren Stirnrads (16b, 17b) unmittelbar in der jeweiligen Zwischenwelle (16, 17) vorgesehen ist.

6. Verdunkelungsvorrichtung nach Anspruch 5, **dadurch gekennzeichnet, daß** das Eingangs-Stirnrad (13a) der Eingangswelle (13) zusammen mit dem vorderen Stirnrad (16a, 17a) jeder Zwischenwelle (16, 17) eine erste Drehzahluntersetzung bewirkt und daß das hintere Stirnrad (16b, 17b) jeder Zwischenwelle (16, 17) zusammen mit dem Ausgangs-Stirnrad (14a) der Ausgangswelle (14) eine zweite Drehzahluntersetzung bewirkt.

7. Verdunkelungsvorrichtung nach Anspruch 5 und ggf. nach Anspruch 6, **dadurch gekennzeichnet, daß** der Durchmesser des vorderen Stirnrads (16a, 17a) jeder Zwischenwelle (16, 17) und der Durchmesser des hinteren Stirnrads (16b, 17b) jeder Zwischenwelle (16, 17) in einem Verhältnis von zwischen ca. 2,0:1 und ca. 2,5:1 zueinander stehen.

8. Verdunkelungsvorrichtung nach einem der vorhergehenden Ansprüche, **dadurch gekennzeichnet, daß** die Zwischenwellen (16, 17) in einem Käfig (12a) angeordnet sind, in dem die Zwischenwellen (16, 17) jedenfalls einseitig gelagert sind, vorzugsweise, daß der Käfig (12a) zusammen mit den Zwischenwellen (16, 17) eine separat montierbare Baueinheit bildet.

9. Verdunkelungsvorrichtung nach einem der vorhergehenden Ansprüche, **dadurch gekennzeichnet, daß** die Stirnrad-Getriebestufe (12) dem Antriebsmotor (8) unmittelbar nachgeschaltet ist, vorzugsweise, daß der Stirnrad-Getriebestufe (12) mindestens eine Planetenrad-Getriebestufe (20), weiter vorzugsweise mehrere unterschiedliche Planetenrad-Getriebestufen (20), nachgeschaltet ist bzw. sind, weiter vorzugsweise, daß die Ausgangswelle (14) der Stirnrad-Getriebestufe (12) dem Sonnenrad einer nachgeschalteten Planetenrad-Getriebestufe (20) zugeordnet ist.

10. Verdunkelungsvorrichtung nach einem der vorhergehenden Ansprüche, **dadurch gekennzeichnet, daß** der Antriebsmotor (8) ein mit hoher Drehzahl laufender Gleichstrommotor ist und das Untersetzungsgetriebe (9) ein entsprechend großes Untersetzungsverhältnis aufweist, vorzugsweise, daß der Antriebsmotor (8) als Gleichstrommotor für Netzspannung ausgeführt ist und über eine Gleichrichterschaltung direkt an Netzspannung anschließbar ist.

## Claims

1. Darkening device having a tubular motor drive assembly with a tubular housing (7) and, arranged in the housing (7), an electric drive motor (8) and a multistage reduction gear (9), wherein the drive motor (8) has a driveshaft (10), wherein the reduction gear (9) is coupled on the input side to the driveshaft (10) of the drive motor (8) and on the output side to a driver (11), wherein the reduction gear (9) has a spur gear stage (12) and wherein the spur gear stage (12) has an input shaft (13) having an input spur gear (13a) and an output shaft (14) having an output spur gear (14a),
**characterized**
**in that** the input shaft (13) and the output shaft (14) can be rotated about the same stationary main shaft axis (15), in that at least two intermediate shafts (16, 17) having stationary shaft axes (18, 19) are provided for coupling the input shaft (13) in drive terms to the output shaft (14) and are designed and arranged such that the resulting flux of force is preferably distributed uniformly over the intermediate shafts (16, 17).

2. Darkening device according to Claim 1, **characterized in that** the shaft axis of the driveshaft (10) is identical to the main shaft axis (15).

3. Darkening device according to Claim 1 or 2, **characterized in that** the shaft axes (18, 19) of the intermediate shafts (16, 17) are arranged in each case parallel to and at a distance from the main shaft axis (15).

4. Darkening device according to one of the preceding claims, **characterized in that** the shaft axes (18, 19) of the intermediate shafts (16, 17) are arranged in a manner distributed uniformly over the angular range around the main shaft axis (15), preferably **in that** there are two intermediate shafts (16, 17), the shaft axes (18, 19) of which are arranged with regard to the main shaft axis (15) in a manner offset by 180° with respect to one another, or **in that** there are three intermediate shafts, the shaft axes of which are arranged with regard to the main shaft axis (15) in a manner offset by 120° with respect to one another.

5. Darkening device according to one of the preceding claims, **characterized in that** the intermediate shafts (16, 17) have in each case a front spur gear (16a, 17a) in engagement with the input spur gear (13a) and a rear spur gear (16b, 17b) in engagement with the output spur gear (14a), preferably **in that** the toothing of the front spur gear (16a, 17a) and rear spur gear (16b, 17b) is provided directly in the respective intermediate shaft (16, 17).

6. Darkening device according to Claim 5, **characterized in that** the input spur gear (13a) of the input shaft (13), together with the front spur gear (16a, 17a) of each intermediate shaft (16, 17), brings about a first reduction in rotational speed, and **in that** the rear spur gear (16b, 17b) of each intermediate shaft (16, 17), together with the output spur gear (14a) of the output shaft (14), brings about a second reduction in rotational speed.

7. Darkening device according to Claim 5 and, if appropriate, according to Claim 6, **characterized in that** the diameter of the front spur gear (16a, 17a) of each intermediate shaft (16, 17) and the diameter of the rear spur gear (16b, 17b) of each intermediate shaft (16, 17) are in a ratio to one another of between about 2.0:1 and about 2.5:1.

8. Darkening device according to one of the preceding claims, **characterized in that** the intermediate shafts (16, 17) are arranged in a cage (12a) in which the intermediate shafts (16, 17) are mounted in each case on one side, preferably **in that** the cage (12a), together with the intermediate shafts (16, 17), forms a unit which can be fitted separately.

9. Darkening device according to one of the preceding claims, **characterized in that** the spur gear stage (12) is connected immediately downstream of the drive motor (8), preferably **in that** at least one planetary gear stage (20), further preferably a plurality of different planetary gear stages (20), is or are connected downstream of the spur gear stage (12), further preferably **in that** the output shaft (14) of the spur gear stage (12) is assigned to the sun gear of a downstream planetary gear stage (20).

10. Darkening device according to one of the preceding claims, **characterized in that** the drive motor (8) is a DC motor running at a high rotational speed and the reduction gear (9) has a correspondingly large reduction ratio, preferably **in that** the drive motor (8) is designed as a DC motor for mains voltage and can be connected directly to mains voltage via a rectifier circuit.

## Revendications

1. Dispositif d'assombrissement comprenant un module d'entraînement à moteur tubulaire, comprenant un boitier de forme tubulaire (7) et, à l'intérieur du boitier (7), un moteur d'entraînement électrique (8) et un engrenage réducteur à plusieurs étages (9), le moteur d'entraînement (8) présentant un arbre d'entraînement (10), l'engrenage réducteur (9) étant accouplé, du côté de l'entrée, à l'arbre d'entraînement (10) du moteur d'entraînement (8) et, du côté de la sortie, à un dispositif d'entraînement (11), l'engrenage réducteur (9) présentant un étage de transmission à pignons droits (12) et l'étage de transmission à pignons droits (12) présentant un arbre d'entrée (13) avec un pignon droit d'entrée (13a) et un arbre de sortie (14) avec un pignon droit de sortie (14a),
**caractérisé en ce que**,
l'arbre d'entrée (13) et l'arbre de sortie (14) peuvent tourner autour du même axe fixe d'arbre principal (15), **en ce qu'**au moins deux arbres intermédiaires (16, 17) sont pourvus d'axes d'arbres fixes (18, 19) en vue de l'accouplement par technique d'entraînement de l'arbre d'entrée (13) à l'arbre de sortie (14), lesquels axes d'arbres sont configurés et disposés de telle sorte que le flux de force résultant se répartisse de préférence uniformément sur les arbres intermédiaires (16, 17).

2. Dispositif d'assombrissement selon la revendication 1, **caractérisé en ce que** l'axe de l'arbre d'entraînement (10) est identique à l'axe d'arbre principal (15).

3. Dispositif d'assombrissement selon la revendication 1 ou 2, **caractérisé en ce que** les axes d'arbres (18, 19) des arbres intermédiaires (16, 17) sont chacun disposés parallèlement à l'axe d'arbre principal (15) et à distance de celui-ci.

4. Dispositif d'assombrissement selon l'une quelconque des revendications précédentes, **caractérisé en ce que** les axes d'arbres (18, 19) des arbres intermédiaires (16, 17) sont répartis de manière uniforme sur la région angulaire tout autour de l'axe d'arbre principal (15), de préférence, **en ce que** deux arbres intermédiaires (16, 17) sont prévus, leurs axes d'arbres (18, 19) étant disposés de manière décalée par rapport à l'axe d'arbre principal (15) de 180° l'un par rapport à l'autre, ou **en ce que** trois arbres intermédiaires sont prévus, leurs axes d'arbres étant disposés de manière décalée par rapport à l'axe d'arbre principal (15) de 120° l'un par rapport à l'autre.

5. Dispositif d'assombrissement selon l'une quelconque des revendications précédentes, **caractérisé en ce que** les arbres intermédiaires (16, 17) présentent chacun un pignon droit avant (16a, 17a), qui est en prise avec le pignon droit d'entrée (13a), et un pignon droit arrière (16b, 17b), qui est en prise avec le pignon droit de sortie (14a), de préférence, **en ce que** la denture du pignon droit avant (16a, 17a) et du pignon droit arrière (16b, 17b) est prévue directement dans l'arbre intermédiaire respectif (16, 17).

6. Dispositif d'assombrissement selon la revendication 5, **caractérisé en ce que** le pignon droit d'entrée (13a) de l'arbre d'entrée (13), conjointement avec le pignon droit avant (16a, 17a) de chaque arbre intermédiaire (16, 17), provoque une première réduction de régime et **en ce que** le pignon droit arrière (16b, 17b) de chaque arbre intermédiaire (16, 17), conjointement avec le pignon droit de sortie (14a) de l'arbre de sortie (14), provoque une deuxième réduction de régime.

7. Dispositif d'assombrissement selon la revendication 5 et éventuellement selon la revendication 6, **caractérisé en ce que** le diamètre du pignon droit avant (16a, 17a) de chaque arbre intermédiaire (16, 17) et le diamètre du pignon droit arrière (16b, 17b) de chaque arbre intermédiaire (16, 17) se situent dans un rapport compris entre environ 2,0:1 et environ 2,5:1.

8. Dispositif d'assombrissement selon l'une quelconque des revendications précédentes, **caractérisé en ce que** les arbres intermédiaires (16, 17) sont disposés dans une cage (12a), dans laquelle les arbres intermédiaires (16, 17) sont chacun montés d'un côté, de préférence **en ce que** la cage (12a), conjointement avec les arbres intermédiaires (16, 17), forment une unité constructive pouvant être montée de manière séparée.

9. Dispositif d'assombrissement selon l'une quelconque des revendications précédentes, **caractérisé en ce que** l'étage de transmission à pignons droits (12) est monté directement en aval du moteur d'entraînement (8), de préférence **en ce que** l'étage de transmission à pignons droits (12) est suivi d'au moins un étage de transmission à roue planétaire (20), et de préférence en outre est suivi de plusieurs étages de transmission à roue planétaire différents (20), et en outre de préférence, **en ce que** l'arbre de sortie (14) de l'étage de transmission à pignons droits (12) est associé à la roue salaire d'un étage de transmission à roue planétaire (20) monté en aval.

10. Dispositif d'assombrissement selon l'une quelconque des revendications précédentes, **caractérisé en ce que** le moteur d'entraînement (8) est un moteur à courant continu fonctionnant à haut régime, et l'engrenage réducteur (9) présente un rapport de réduction élevé en conséquente, de préférence **en ce que** le moteur d'entraînement (8) est réalisé sous forme d'un moteur à courant continu pour une tension de réseau et peut être raccordé directement à la tension de réseau par le biais d'un circuit redresseur.
